(19) Europäisches Patentamt
European Patent Office
Office européen des brevets

(11) Publication number: 0 330 246 B1

(12) EUROPEAN PATENT SPECIFICATION

(45) Date of publication of patent specification: 08.07.92 Bulletin 92/28

(51) Int. Cl.$^5$: C08F 8/14, D06M 15/21

(21) Application number: 89200033.2

(22) Date of filing: 06.01.89

(54) **Curable dispersion.**

(30) Priority: 12.01.88 NL 8800068

(43) Date of publication of application: 30.08.89 Bulletin 89/35

(45) Publication of the grant of the patent: 08.07.92 Bulletin 92/28

(84) Designated Contracting States: AT BE CH DE ES FR GB GR IT LI NL SE

(56) References cited:
FR-A- 2 414 212
US-A- 3 888 844
US-A- 4 031 037
US-A- 4 101 490
US-A- 4 216 302
US-A- 4 244 850

(73) Proprietor: DSM N.V.
Het Overloon 1
NL-6411 TE Heerlen (NL)

(72) Inventor: Pons, Dick Adriaan
Fazantstraat 55
NL-3145 CA Maassluis (NL)
Inventor: van Hout, Johannes Barend
Industrieweg 60C
NL-3044 CC Rotterdam (NL)

EP 0 330 246 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a curable dispersion based on a water-dispersed polymer of one or more ethylenically unsaturated monomers with an average molecular weight between 2 x $10^5$ and 2 x $10^6$ dalton, emulsion stabilizers and/or emulsifiers.

US-A-4244850 describes such a dispersion, which is prepared by subjecting ethylenically unsaturated monomers containing epoxy or carboxyl groups to radical polymerization with monomers like ethyl (meth)acrylate, vinyl acetate and ethylene. After the radical polymerization, an ethylenically unsaturated compound containing a carboxyl or epoxy group is added, with under the influence of a quaternary ammonium salt as catalyst an epoxy-carboxylic acid reaction taking place. This adduction reaction takes place at elevated temperature (80¤C) during 30 minutes. In this way ethylenically unsaturated groups are bound to the polymer, enabling crosslinking of the polymers. However, this coupling reaction takes much time. In addition, there is a risk that the radical reaction continues owing to the elevated temperature and that the ethylenically unsaturated groups to be bound to the polymer will react prematurely.

The object of the invention is to provide such a dispersion, which can be prepared more easily and with greater operational reliability. According to the invention this is achieved in that the polymer contains groups according to formula I

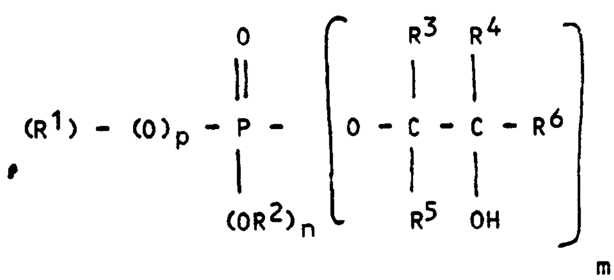

I

where
m= 1 or 2
p= 0 or 1
n= 2 - m
$R^1$= organic group with 2-15 C atoms containing at least a group according to formula II

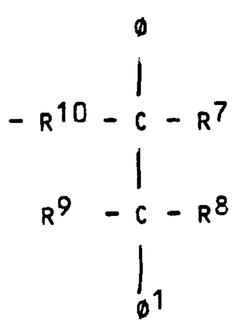

formula II

where Ø-C-C-$Ø^1$ represents a polymer chain and $R^7$, $R^8$ and $R^9$ independently represent H or an organic group with 1-4 C atoms, and $R^{10}$ is an organic group with 1-10 C atoms or a chemical bond
$R^2$ = H, an organic group with 1-10 C atoms or $R^1$
$R^6$ = an organic group according to formula III

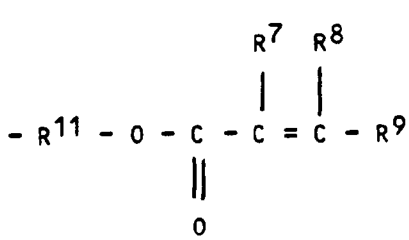

formula III

where the group is bound via $R^{11}$, where $R^7$, $R^8$ and $R^9$ have the above-mentioned meaning, and where $R^{11}$ represents $C_2$-$C_{12}$-alkylène and

$R^3$, $R^4$ and $R^5$ are the same or different and represent H, ($C_1$-$C_4$) alkyl or ($C_6$-$C_{10}$) aryl.

According to a preferred embodiment of the invention a group according to formula I is obtained by polymerizing ethylenically unsaturated monomers in a radical polymerization step. In a first step 0.5-25.0 wt. %, relative to the monomers, preferably 2.0-10.0 wt. %, of a phosphate or phosphonate compound or mixtures thereof that contain at least an organic residue with a (meth)acryl derivative or another unsaturated compound, such as, for instance a vinyl, allyl or a styrene derivative, are polymerized, and after this polymerization an ethylenically unsaturated and epoxy-containing monomer being added at a temperature between 0¤C and 50¤C, preferably between 20¤C and 30¤C, in amounts between 1 and 15 wt. % relative to the polymer.

Examples of phosphate and phosphonate compounds are mono- and diphosphate esters of hydroxyethyl (meth)acrylate, 1-hydroxypropyl(meth)acrylate, 4-hydroxybutyl (meth)acrylate, 6-hydroxyhexyl(meth)acrylate, dihydroxypropyl (meth)acrylate, mono(meth)acrylate ester of polypropylene glycol or polyethylene glycol, mono- or dihydroxyalkyl esters of crotonic acid, fumaric acid, itaconic acid, maleic acid or aconite, vinyl benzyl alcohol, allyl alcohol or N-2-hydroxyethyl (meth)acrylamide and phosphonates, for instance (meth)acrylamidomethane phosphonate, styrene phosphonate, vinyl phosphonate and allyl phosphonate. The phosphorus-containing compounds may, for instance, be prepared by methods such as described in US-A-4110285 and US-A-4101490.

As examples of the ethylenically unsaturated and epoxy-containing monomer, use can be made of glycidyl acrylate, glycidyl methacrylate, diglycidyl fumarate, diglycidyl maleate, diglycidyl crotonate, diglycidyl itaconate, diglycidyl citraconate, glycidyl cinnamate, 1-(3,4-oxirane) butane (meth)acrylate, 1-(3,4-oxirane) cyclohexane (meth)acrylate and bis[1-3,4-oxirane) butane] fumarate.

The polymer further preferably contains 0.5-10 wt.% of acid residues, which - after salt formation - have a stabilizing effect on the dispersion. By preference the polymer contains 1-5 wt.% of acid.

Examples of monomers with an acid residue that can be copolymerized are acrylic acid, methacrylic acid, fumaric acid, maleic acid, crotonic acid and itaconic acid.

The above-mentioned monomers can be polymerized together with ethylenically unsaturated monomers that further do not contain a functional group. These preferably are alkyl acrylates, alkyl methacrylates, dialkyl maleates, dialkyl fumarates, vinyl esters such as vinyl acetate, vinyl propionate, vinyl butyrate, vinyl pivalate, vinyl-2-ethylhexoate, vinyl stearate, vinyl laurate, vinyl versatic acid, vinyl ethers, vinyl chloride, alkenes such as ethylene, propylene, isobutene, butadiene, styrene, vinyl toluene, $\alpha$-methyl styrene, p-methyl styrene and/or acrylonitrile.

Besides these monomers, also other monomers, containing hydroxyl groups, can be applied in minor amounts up to 10 wt.%, such as N-methylol (meth)acrylamide, hydroxy-ethyl (meth)acrylate, N-butoxy (meth)acrylamide and hydroxypropyl (meth)acrylate.

Also, up to 10 wt.% of polyunsaturated compounds such as triallyl cyanurate, divinylbenzene, divinyl maleate, divinyl adipate, vinyl crotonate, ethylene glycol diacrylate ester and other di- and tri-acrylate esters can be applied.

The polymer may contain functional groups providing an emulsifying or stabilizing action (for instance (meth)acrylic acid, acrylamidopropane sulphonic acid, sulphopropyl (meth)acrylate or polyethylene glycol acrylate), functional groups improving the adhesion properties (for instance silicon-containing groups), or functional groups that improve the curing process by means of ultraviolet light (for instance amino acrylates and acrylate esters of hydroxy benzophenone).

The polymer is preferably prepared by means of emulsion polymerization, use being made of catalysts suitable for this reaction, for instance persulphates, hydrogen peroxide, organic peroxides and azo-compounds, optionally in combination with reducing agents. The reaction temperature usually is between 20¤C and 90¤C, but may also be between -15¤C and 100¤C, in which case anti-freeze agents will have to be applied at temperatures below 0¤C.

During the polymerization also other compounds may be present, for instance chain length regulators such as mercaptans or buffers such as for instance a bicarbonate.

The dispersion may further contain emulsion stabilizers and/or emulsifiers in amounts between 0.2 and 10.0 wt.%, by preference between 0.5 and 5.0 wt.%. As such, use is preferably made of anionic or non-ionic compounds; for optimum emulsifying action by preference mixtures are used. Examples of such compounds are salts of alkyl carboxylic acids, alkyl sulphates, alkyl sulphonates, alkyl phosphates, alkyl amines, alkylaryl sulphonates, alkyl polyethylene glycol ethers, alkylaryl polyethylene glycol ethers, alkyl ether sulphates, alkyl polyethylene glycol ether carboxylic acids, alkyl polyethylene glycol ether sulphates and alkylaryl polyethylene glycol esters of sulphuric acid and phosphoric acid and alkylaryl polyethylene glycol ethers of ether carboxylic acid. Use can also be made of stabilizers with an ethylenic unsaturation, for instance acrylamidopropylene sulphonic acid or sulphopropyl (meth)acrylate, so that these can be copolymerized in the radical polymerization.

The polymer preferably has an average molecular weight between 200,000 and 2,000,000 dalton; at a lower molecular weight the coating prepared using a dispersion on the basis of such a polymer has poorer properties, notably as regards water resistance and mechanical properties. A molecular weight higher than 2 x $10^6$ dalton is technically difficult to realize.

There is particular advantage in curing the composition according to the invention under the influence of light. To this end use is preferably made of an initiator system that is sensitive to UV light; preferably use is made of a dispersion comprising an amount between 0.5 and 5.0 wt.% relative to the polymer.

The photoinitiators may be the usual homolytic compounds generating radicals via proton abstraction. Normally use is made of a system that is sensitive between 200 and 1000 nm, preferably between 200 and 500 nm. A good survey of photoinitiators that may be used is given in UV, NEB curing formulations for printing inks, coatings and paint, Edited by Dr. R. Holman, published by Sita Technology (London, England). Examples of suitable photoinitiators include benzophenone, with tertiary amines or mercaptans, benzil (ketal), acetophenone derivatives and benzoin derivatives.

There may be advantage in applying a mixture of the above-mentioned polymers with relatively low-molecular acrylate-containing compounds. By preference use is made of compounds that contain acrylate groups. The molecular weight thereof preferably is between 300 and 6000 dalton, more in particular between 580 and 3000 dalton.

According to a preferred embodiment of the invention the prepolymer contains at least two ethylenical unsaturations. According to a further preferred embodiment of the invention the prepolymer contains at least 3 terminal acrylate groups. Such an acrylate prepolymer may be aliphatic, aromatic, di- or mono-functional meth(acrylate), allyl- or acrylamide ethylenically unsaturated. The prepolymer may be based on polyesters, polyols, urethanes, melamine, epoxy, acryl and silicon oligomers that, for instance, have a molecular weight between 200 and 2800 dalton. Examples are 1,3-butane diol di(meth)acrylate, ethylene glycol di(meth)acrylate, bisphenol-A-di(meth)acrylate, pentaerythritol tri(meth)acrylate, propane diol di(meth)acrylate, trimethylol propane tri(meth)acrylate, ethoxylated or propoxylated bisphenol-A-di(meth)acrylate, allyl (meth)acrylate, diallyl (meth)acrylate, diallyl fumarate, diallyl maleate, melamine acrylates, triallyl triazine, vinyl trialkoxysilane, triallyl cyanurate, 1,6-hexanediol di(meth)acrylate, divinyl benzene and triallyl isocyanurate. Other examples are the reaction product of a mainly OH-terminated polyester on the basis of maleic anhydride and diethylene glycol and (meth)acrylic acid, a phenol formaldehyde prepolymer with a molecular weight of about 1000, and sugars, cellulose and starch derivatives, with (meth)acrylic acid or with glycidyl (meth)acrylate. There also is particular advantage in applying the reaction product of epoxy-terminated prepolymers with (meth)acrylic acid.

The dispersion according to the invention can, together with a photoinitiator system and, if desired, with the customary additives, for instance thickeners, pigments and anti-foam agents, be applied particularly advantageously as a coating composition, curable by ultra-violet (UV) light, for textile, wood, paper, stone, etc.

For textile coating use is preferably made of a process in which the textile is first impregnated with a dispersion according to the invention, subsequently water is evaporated, and then the impregnated textile is irradiated using UV light.

If the dispersion is used for coatings that must remain flexible at room temperature, by preference use is made of a polymer with a glass transition temperature (Tg) below 20¤C, more in particular below 0¤C.

The invention will be elucidated with reference to the following examples, without being restricted thereto.

## Examples

### Example I

A monomer mixture of an aqueous pre-emulsion consisting of 47.5 parts by weight of styrene, 47.5 parts by weight of 2-ethylhexyl acrylate and 5 parts by weight of hydroxyethyl methacrylate mono-diphosphate ester was polymerized at 80¤C in the presence of 2 wt.% (relative to monomers) nonyl phenol-(10-ethylene oxide) sulphate as emulsifier and 0.5 wt.% ammonium persulphate as initiator. The pre-emulsion was added to the polymerization mixture in three hours' time. After the reaction mixture had post-reacted for 1 hour at 85¤C, 1 wt.% sodium formaldehyde sulphoxylate was added (so that a peroxide-free dispersion was obtained). The dispersion was subsequently cooled to 25¤C, upon which 5 wt.% glycidyl acrylate was added. After 2 hours' stirring the pH was raised from 2.0 to 7.0 by means of dimethyl ethanol amine. The solids content of the dispersion was 50%.

Example II

Example I was repeated except for the monomer mixture, which was now composed of 47.5 parts by weight of methyl methacrylate, 47.5 parts by weight of butyl acrylate and 5 parts by weight of hydroxy ethyl methacrylate diphosphate ester.

Example III

Example I was repeated except for the monomer mixture, which was now composed of 45 parts by weight of styrene, 45 parts by weight of ethyl hexyl acrylate and 10 parts by weight of hydroxyethyl methacrylate mono-diphosphate ester.

Example IV

Example I was repeated, now acrylic acid being copolymerized instead of hydroxyethyl methacrylate phosphate ester.

Example V

Example I was repeated, now styrene phosphonic acid being copolymerized instead of the phosphate ester.

To 100 parts by weight of the dispersions (with a solids content of 50%) obtained according to Examples I through V the following was added:
0.5 part by weight of benzophenone
0.5 part by weight of 2-hydroxy-2-methyl-1-phenyl propane-1-one (Darocure 1173, Merck) and
1.0 part by weight of xylene.

Subsequently, the mixtures thus obtained were used to prepare films on glass (film applicator with an aperture diameter of 125 μm), which were dried for 4 hours at room temperature.
After drying, a number of the films were not a) or were b) passed under UV lamps with a power supply of 3.5 $J/cm^2$, use being made of a conveyor belt.

Each of the films thus obtained was subjected to the water stain test, the acetone resistance test, and the blocking resistance test (see Table 1).

The films on the basis of the dispersions obtained according to Examples I through V have been called I A through V A if they were not passed under the UV lamps and I B through V B if they were passed under the UV lamps.

TABLE 1

| Examples | Water stain test (minutes) | Acetone resistance test (number of rubs) | Blocking resistance (*) |
| --- | --- | --- | --- |
| I A | 2 | 15 | 1 |
| I B | > 30 | > 100 | 3 |
| II A | < 1 | 20 | 2 |
| II B | 16 | > 100 | 3 |
| III A | < 1 | 25 | 1 |
| III B | 12 | > 100 | 2 |
| IV A | 2 | 25 | 1 |
| IV B | 2 | 30 | 1 |
| V A | 1 | 20 | 1 |
| V B | 11 | 90 | 3 |

(*) with
1 = poor
2 = moderate
3 = fair

## Claims

1. Curable dispersion based on a water-dispersed polymer of one or more ethylenically unsaturated monomers with an average molecular weight between $2 \times 10^5$ and $2 \times 10^6$ dalton, emulsion stabilizers and/or emulsifiers, characterized in that it contains polymer groups according to formula I

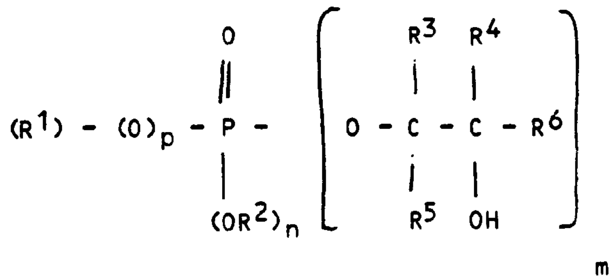

formula I

where

m = 1 or 2

p = 0 or 1

n = 2 - m

$R^1$ = organic group with 2-15 C atoms containing at least a group according to formula II

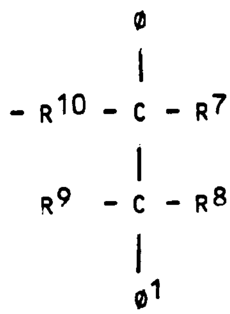

formula II

where Ø-C-C-$Ø^1$ represents a polymer chain and $R^7$, $R^8$ and $R^9$ independently represent H or an organic group with 1-4 C atoms, and $R^{10}$ is an organic group with 1-10 C atoms or a chemical bond

$R^2$ = H, an organic group with 1-10 C atoms or $R^1$

$R^6$ = an organic group according to formula III

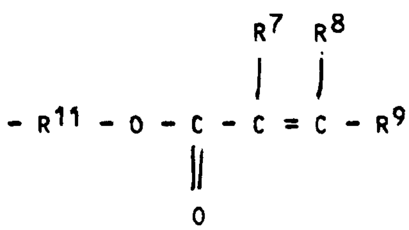

formula III

the group being bound via $R^{11}$, and $R^7$, $R^8$ and $R^9$ having the above-mentioned meaning, and $R^{11}$ representing $C_2$-$C_{12}$-alkylène and

$R^3$, $R^4$ and $R^5$ are the same or different and represent H, ($C_1$-$C_4$)alkyl or ($C_6$-$C_{10}$)aryl.

2. Ultraviolet light curable coating composition based on a dispersion according to claim 1 and a photoinitiator system.

3. Composition according to claim 1 or 2, characterized in that the dispersion also contains a prepolymer, which at least contains two ethylenic unsaturations and has a molecular weight between 300 and 6000 dalton.

4. Composition according to claim 2, characterized in that the dispersion also contains a prepolymer with 3 terminal acrylate groups.

5. Process for the preparation of a dispersion according to claim 1 involving polymerization of ethylenically unsaturated monomers in a radical polymerization step, characterized in that in a first step 0.5-25.0 wt.% relative to the monomers of a phosphate or phosphonate compound or mixtures thereof that contain at least an organic residue with a (meth)acryl derivative or another unsaturated compound (eg. a styrene derivative) are polymerized and after this polymerization an ethylenically unsaturated and epoxy-containing monomer is added.

6. Process for coating of textile by impregnating textile using a curable dispersion, characterized in that textile is impregnated using a dispersion according to any one of claims 1-4, water is evaporated, and the impregnated textile is irradiated using UV light.

7. Polymer based on one or more ethylenically unsaturated monomers with an average molecular weight between $2 \times 10^5$ and $2 \times 10^6$ dalton, characterized in that the polymer contains groups according to formula I as indicated in claim 1.

**Patentansprüche**

1. Härtbare Dispersion auf Basis eines wasserdispergierten Polymers eines oder mehrerer äthylenisch ungesättigter Monomere mit einem mittleren Molgewicht von $2 \times 10^5$ bis $2 \times 10^6$ Dalton, Emulsionsstabilisatoren und/oder Emulgatoren, dadurch gekennzeichnet, daß sie Polymergruppen der Formel (I)

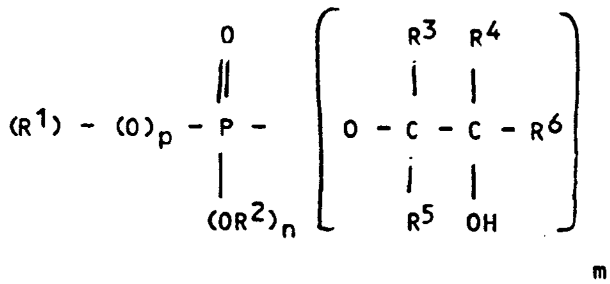

(I),

worin
m = 1 oder 2,
p = Null oder 1,
n = 2 bis m,
$R^1$ eine organische Gruppe mit 2 bis 15 C-Atomen ist, die mindestens eine Gruppe der Formel (II)

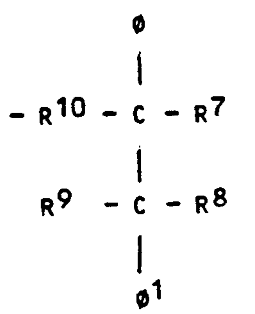

(II)

enthält, worin Ø-C-C-Ø$^1$ eine polymerkette darstellt und $R^7$, $R^8$ und $R^9$ unabhängig H oder eine organische Gruppe mit 1 bis 4 C-Atomen bedeuten und $R^{10}$ eine organische Gruppe mit 1 bis 10 C-Atomen oder eine chemische Bindung ist,
$R^2$ H, eine organische Gruppe mit 1 bis 10 C-Atomen oder $R^1$ darstellt,
$R^6$ eine organische Gruppe der Formel

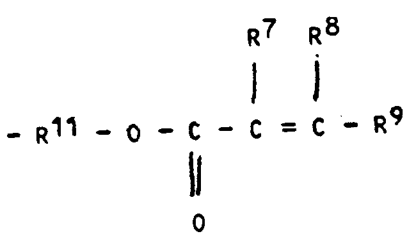

(III)

ist, wobei die Gruppe über $R^{11}$ gebunden ist und worin $R^7$, $R^8$ und $R^9$ die oben angegebene Bedeutung haben und $R^{11}$ die Bedeutung $C_2$-$C_{12}$-Alkylen hat, und
$R^3$, $R^4$ und $R^5$ gleich oder verschieden sind und H, ($C_1$-$C_4$)-Alkyl oder ($C_6$-$C_{10}$)-Aryl darstellen, enthält.

2. Im UV-Licht härtbare Beschichtungszusammensetzung auf Basis einer Dispersion nach Anspruch 1 und eines Photoinitiatorsystems.

3. Zusammensetzung nach Anspruch 1 oder 2, dadurch gekennzeichnet, daß die Dispersion auch ein Präpolymer enthält, das mindestens zwei äthylenische Ungesättigtheiten enthält und ein Molgewicht von 300 bis 6000 Dalton aufweist.

4. Zusammensetzung nach Anspruch 2, dadurch gekennzeichnet, daß die Dispersion auch ein Präpolymer mit drei terminalen Acrylatgruppen enthält.

5. Verfahren zur Herstellung einer Dispersion nach Anspruch 1, das die Polymerisation von äthylenisch ungesättigten Monomeren in einem Radikalpolymerisationsschritt umfaßt, dadurch gekennzeichnet, daß in einem ersten Schritt 0,5 bis 25,0 Gew.%, bezogen auf die Monomere, einer Phosphat- oder Phosphonatverbindung oder von Mischungen hievon, die mindestens einen organischen Rest enthalten, mit einem (Meth)acrylderivat oder einer anderen ungesättigten Verbindung (z.B. einem Styrolderivat) polymerisiert werden und nach dieser Polymerisation ein ¨athylenisch ungesättigtes und epoxyhaltiges Monomer zugesetzt wird.

6. Verfahren zum Beschichten von Textilmaterial durch Imprägnieren des Textilmaterials unter Verwendung einer härtbaren Dispersion, dadurch gekennzeichnet, daß das Textilmaterial unter Verwendung einer Dispersion nach einem der Ansprüche 1 bis 4 imprägniert, Wasser abgedampft und das imprägnierte Textilmaterial unter Verwendung von UV-Licht bestrahlt wird.

7. Polymer auf Basis eines oder mehrerer äthylenisch ungesättigter Monomere mit einem mittleren Molgewicht von $2 \times 10^5$ bis $2 \times 10^6$ Dalton, dadurch gekennzeichnet, daß das Polymer Gruppen der Formel (I), wie in Anspruch 1 angegeben, enthält.

## Revendications

1. Dispersion réticulable à base d'un polymère dispersé dans de l'eau d'un ou plusieurs monomères à insaturation éthylénique ayant une masse moléculaire moyenne comprise entre $2 \times 10^5$ et $2 \times 10^6$ daltons, de stabilisants d'émulsion et/ou d'émulsifiants, caractérisée en ce qu'elle contient des groupes polymères de formule I

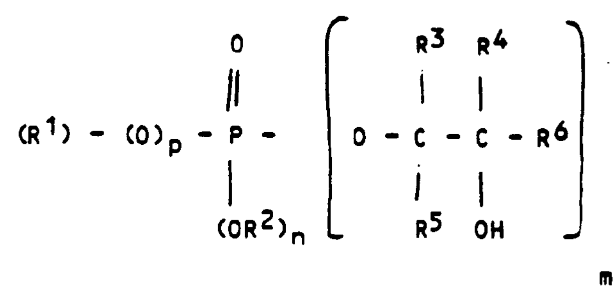

formule I

dans laquelle
m = 1 ou 2
p = 0 ou 1
n = 2 - m
$R^1$ = groupe organique comportant 2-15 atomes de C contenant au moins un groupe de formule II

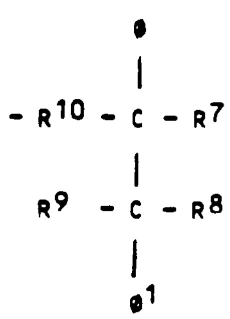

formule II

dans laquelle Ø-C-C-$Ø^1$ représente une chaîne polymère et $R^7$, $R^8$ et $R^9$ représentent indépendamment H ou un groupe organique comportant 1-4 atomes de C, et $R^{10}$ est un groupe organique comportant 1-10 atomes

de C ou une liaison chimique
$R^2$ = H, un groupe organique comportant 1-10 atomes de C ou $R^1$
$R^6$ = un groupe organique de formule III

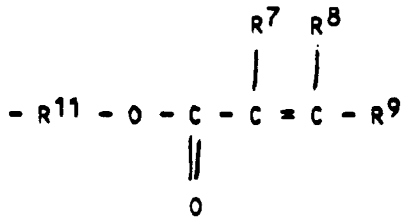

formule III

le groupe étant lié par l'intermédiaire de $R^{11}$, et $R^7$, $R^8$ et $R^9$ ayant les définitions indiquées ci-dessus, et $R^{11}$ représentant un groupe alkylène en $C_2$-$C_{12}$, et
$R^3$, $R^4$ et $R^5$ sont identiques ou différents et représentent H, un groupe alkyle en $C_1$-$C_4$ ou un groupe aryle en $C_6$-$C_{10}$.

2. Composition de revêtement réticulable par la lumière ultraviolette à base d'une dispersion selon la revendication 1 et d'un système photo-initiateur.

3. Composition selon la revendication 1 ou 2, caractérisée en ce que la dispersion contient aussi un prépolymère, qui contient au moins deux insaturations éthylénique et a une masse moléculaire comprise entre 300 et 6000 daltons.

4. Composition selon la revendication 2, caractérisée en ce que la dispersion contient aussi un prépolymère comportant 3 groupes acrylate terminaux.

5. Procédé de préparation d'une dispersion selon la revendication 1, qui consiste à polymériser des monomères à insaturation éthylénique dans une étape de polymérisation radicalaire, caractérisé en ce que, dans une première étape, on polymérise 0,5-25,0% en poids, par rapport aux monomères, d'un composé phosphate ou phosphonate, ou d'un mélange de ceux-ci, comportant au moins un résidu organique, avec un dérivé (méth)acrylique ou un autre composé insaturé (par exemple un dérivé styrénique) et, à l'issue de cette polymérisation, on ajoute un monomère à insaturation éthylénique contenant un époxy.

6. Procédé de revêtement d'un textile par imprégnation du textile au moyen d'une dispersion réticulable, caractérisé en ce que le textile est imprégné d'une dispersion selon l'une quelconque des revendications 1-4, l'eau est évaporée et le textile imprégné est irradié sous une lumière UV.

7. Polymère à base d'un ou plusieurs monomères à insaturation éthylénique de masse moléculaire moyenne comprise entre 2 x $10^5$ et 2 x $10^6$ daltons, caractérisé en ce que le polymère contient des groupes de formule I telle que définie dans la revendication 1.